# FASCICULE DE BREVET EUROPEEN

(11) **EP 0 978 634 B1**
(45) Date de publication et mention de la délivrance du brevet: **27.10.2004**
(21) Numéro de dépôt: 99401978.4
(22) Date de dépôt: 04.08.1999
(51) Int. Cl.: F01D 5/18, F01D 5/14

(54) **Aube de turbine refroidie à bord de fuite aménagé**
Gekühlte Turbinenschaufel mit verbesserter Hinterkante
Cooled turbine vane with improved trailing edge

(30) Priorité: 05.08.1998 FR 9810042
(43) Date de publication de la demande: 09.02.2000
(73) Titulaire: Snecma Moteurs, 75015 Paris (FR)
(72) Inventeur: Bariaud, Christian Bernard, 91620 La Ville du Bois (FR); Bil, Eric Stéphan, 77590 Chartrettes (FR)

(56) Documents cités:
- US-A- 4 236 870
- US-A- 4 515 523
- US-A- 5 215 431
- US-A- 5 243 759
- US-A- 5 288 207
- US-A- 5 344 283

## Description

L'invention concerne une aube réfrigérée de turbine comprenant une plate-forme et une pale aérodynamique présentant un bord de fuite à la jonction de la paroi formant l'extrados et de la paroi formant l'intrados et une pluralité de fentes débouchant au bord de fuite du côté de l'intrados et destinées à prélever de l'air de refroidissement circulant dans une cavité interne de ladite pale.

De telles aubes réfrigérées sont notamment employées dans les aubages de turbine, qui sont soumis à des températures élevées.

Classiquement, le bord de fuite des aubes de turbine refroidies comporte une succession de fentes permettant de prélever de l'air situé dans une cavité en amont. Ces fentes débouchent dans des excavations ménagées près du bord de fuite du côté de l'intrados et séparées par des raidisseurs qui reconstituent localement le profil aérodynamique de la pale près du bord de fuite. EP 0 785 339 montre une telle disposition.

Il a été constaté que l'alternance des excavations dans lesquelles circulent un air frais et des raidisseurs soumises localement aux températures élevées de gaz de combustion, conduit à des champs thermiques importants dans la zone du bord de fuite, qui induisent des contraintes thermiques élevées pouvant entraîner des détériorations de la pale dans la région du bord de fuite.

Le but de l'invention est de proposer une nouvelle géométrie du bord de fuite qui pallie ces inconvénients et qui permette d'améliorer la durée de vie des aubes de turbine refroidies.

L'invention atteint son but par le fait que l'aube comporte du côté de l'intrados et au voisinage immédiat du bord de fuite, une feuillure qui s'étend depuis la plate-forme jusqu'à la tête d'aube et qui est délimitée par la face interne de la paroi formant l'extrados et par une surface sensiblement perpendiculaire à l'intrados, et par le fait que les fentes débouchent dans ladite surface.

Ainsi les raidisseurs étant supprimés, le champ thermique au niveau du bord de fuite est plus homogène, et cette zone est soumise à des sollicitations thermiques plus faibles.

Avantageusement les fentes sont séparées par des pontets reliant la paroi formant l'intrados à la paroi formant l'extrados.

De manière avantageuse la fente la plus proche de la plate-forme débouche en partie dans la plate-forme et la feuillure se prolonge dans la plate-forme en regard de ladite fente.

D'autres avantages et caractéristiques de l'invention ressortiront à la lecture de la description suivante faite à titre d'exemple non limitatif et en référence aux dessins annexés dans lesquels :

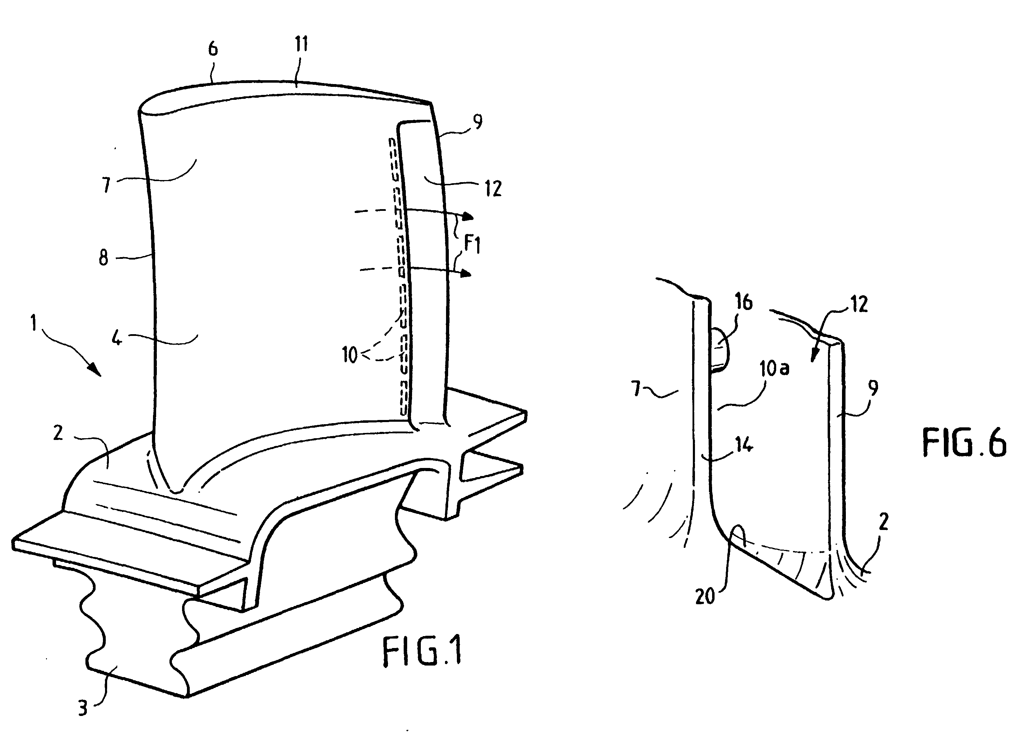

- La figure 1 montre en perspective une aube de turbine refroidie selon l'invention,
- La figure 2 est une coupe de la pale de l'aube montrant la région du bord de fuite selon un plan passant entre deux fentes,
- La figure 3 est une coupe de la pale de l'aube selon un plan coupant une fente,
- La figure 4 est une coupe selon la ligne IV IV de la figure 2,
- La figure 5 est une coupe selon la ligne V V de la figure 2, et
- La figure 6 montre en perspective le raccordement de la fente inférieure, de la plate-forme et du bord de fuite.

Sur le dessin on a représenté par la référence 1 une aube réfrigérée de turbine qui comporte une plate-forme 2 surmontant un pied d'aube 3, et une pale 4 qui s'étend au-dessus de la plate-forme 2. La pale 4 comporte au moins une cavité interne 5 dans laquelle sont disposés des dispositifs de refroidissement, et est délimité par une paroi 6 formant l'extrados 6a et par une paroi 7 formant l'intrados 7a, l'extrados et l'intrados étant reliés en amont par un bord d'attaque 8 curviligne, et se rejoignant en aval au niveau du bord de fuite 9, l'amont et l'aval étant définis dans le sens de la circulation des gaz chauds, en fonctionnement, autour de la pale 4.

En fonctionnement, une partie de l'air F1 qui circule dans la cavité interne 5 voisine du bord de la fuite 9 s'évacue au niveau du bord de fuite 9 et du côté de l'intrados 7a par une pluralité de fentes 10 disposées entre la plate-forme 2 et la tête d'aube 11.

Selon la présente invention, la paroi 7 formant l'intrados 7a, ne s'étend pas jusqu'au bord de fuite 9. Il est en effet prévu près du bord de fuite 9 et du côté de l'intrados 7a un espace angulaire sous forme d'une feuillure 12 qui s'étend entre la plate-forme 2 et la tête d'aube 11. Cette feuillure 12 est délimitée d'une part par la face interne 13 de la paroi 6 formant l'extrados 6a et par une surface 14 sensiblement perpendiculaire à l'intrados 7a et qui forme la face d'extrémité de la paroi 7. Les fentes 10 débouchent dans cette surface 14, et l'air évacué par les fentes 10 vient lécher la face interne 13 jusqu'au bord de fuite 9 sur toute la hauteur de la feuillure 12.

Au niveau de la surface 14, la face interne 15 de la paroi 7 est écartée de la face interne 13 de la paroi d'une distance égale à la largeur des fentes 10. Entre deux fentes consécutives et au voisinage de la surface 14, il est prévu un pontet 16 qui relie les deux parois 6 et 7.

Les pontets 16 assurent la rigidification de la pale 4 au niveau du bord de fuite 9.

La portion d'extrémité de la paroi 6 formant l'extrados 6a, située au droit de la feuillure 12, refroidie par l'air F1 issu des fentes 10, est soumise à un champ thermique homogène et par le fait même à des sollicitations thermiques plus faibles. Il en est également ainsi de la paroi 7 formant l'extrados 7a en amont de la surface 14.

Selon une autre caractéristique de l'invention, la fente 10a, la plus proche de la plate-forme 2 pénètre en partie dans cette dernière, et la feuillure 12 est prolongée dans la plate-forme 2 en regard de la fente 10a.

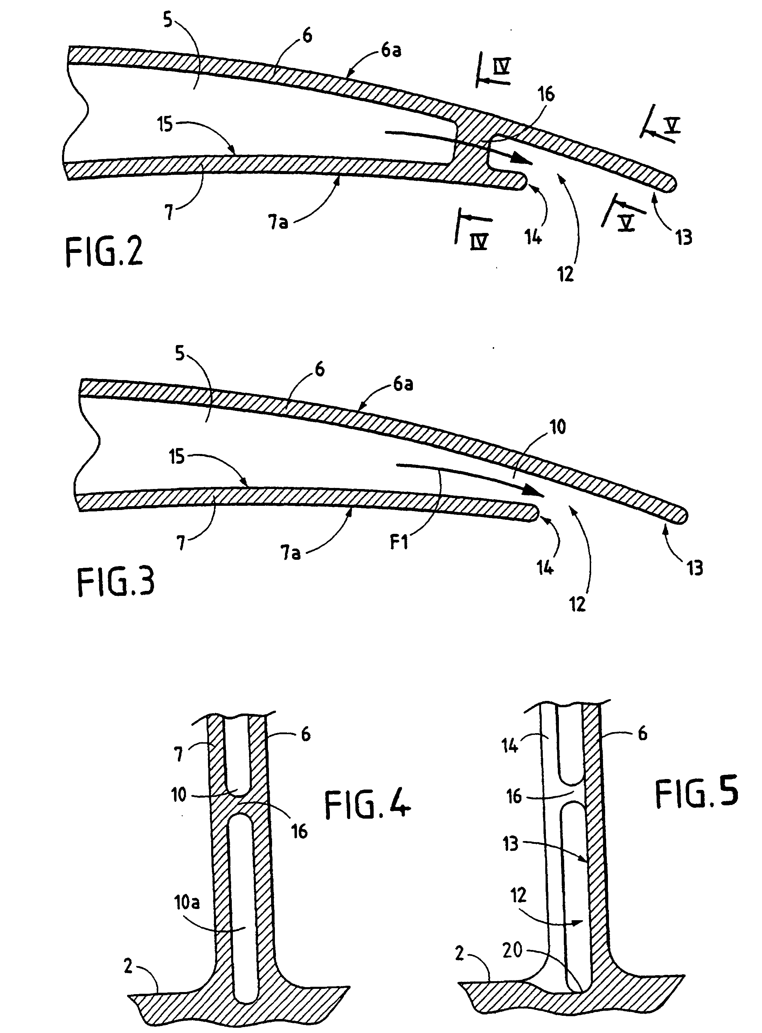

Cette disposition, montrée sur les figures 4 et 5, a pour effet d'améliorer le passage d'effort par suppression de l'accident de forme créé par la première fente au bord de fuite.

Le raccordement entre la fente 10a, la plate-forme 2 et le bord de fuite 9 est défini de manière à minimiser les contraintes dans cette zone. La zone inférieure de la fente 10a se présente au voisinage de son embouchure sous la forme d'une gouttière 20 qui s'évase de manière continue vers l'aval au pied de la feuillure 12 et remonte en pente douce pour se raccorder à la surface de la plate-forme 2 et à la face interne 13 de la paroi 6 formant l'intrados. Un exemple de raccordement est montré sur la figure 6.

## Revendications

1. Aube réfrigérée de turbine comprenant une plate-forme (2) et, une pale (4) aérodynamique présentant un bord de fuite (9) à la jonction de la paroi (6) formant l'extrados (6a) et de la paroi (7) formant l'intrados (7a), et une pluralité de fentes (10) débouchant au bord de fuite (9) du côté de l'intrados (7a) et destinées à prélever de l'air de refroidissement circulant dans une cavité (5) de la pale (4), **caractérisée par le fait qu'**elle comporte du côté de l'intrados (7a), et au voisinage immédiat du bord de fuite (9), une feuillure (12) qui s'étend depuis la plate-forme (2) jusqu'à la tête d'aube (11), et qui est délimitée par la face interne (13) de la paroi (6) formant l'extrados (6a) et par une surface (14) sensiblement perpendiculaire à l'intrados (7), et **par le fait que** les fentes (10) débouchent dans ladite surface (14) et **par le fait que** la fente (10a) la plus proche de la plate-forme (2) débouche en partie dans la plate-forme (2), et **par le fait que** la feuillure (12) se prolonge dans la plate-forme (2) en regard de ladite fente (10a).

2. Aube selon la revendication 1 **caractérisée par le fait que** les fentes (10) sont séparées par des pontets (16) reliant la paroi (7) formant l'intrados (7a) à la paroi (6) formant l'extrados (6a).

## Claims

1. Cooled turbine blade comprising a platform (2) and an aerodynamic airfoil (4) having a trailing edge (9) at the junction between the wall (6) forming the suction side (6a) and the wall (7) forming the pressure side (7a), and a plurality of slots (10) which emerge in the trailing edge (9) on the pressure side (7a) and are intended to remove cooling air circulating in a cavity (5) of the airfoil (4), **characterized in that** the blade includes, on the pressure side (7a), and in the immediate vicinity of the trailing edge (9), a recess (12) that extends from the platform (2) as far as the blade tip (11) and which is bounded by the internal face (13) of the wall (6) forming the suction side (6a) and by a surface (14) approximately perpendicular to the pressure side (7), **in that** the slots (10) emerge in the said surface (14), **in that** the slot (10a) closest to the platform (2) partly emerges in the platform (2) and **in that** the recess (12) extends into the platform (2) facing the said slot (10a).

2. Blade according to Claim 1, **characterized in that** the slots (10) are separated by bridges (16) that join the wall (7) forming the pressure side (7a) to the wall (6) forming the suction side (6a).

## Patentansprüche

1. Gekühlte Turbinenschaufel mit einer Plattform (2) und einem aerodynamischen Schaufelblatt (4), das an der Verbindungsstelle der die Wölbungsaußenfläche (6a) bildenden Wand (6) und der die Wölbungsinnenfläche (7a) bildenden Wand (7) eine Hinterkante (9) sowie mehrere Schlitze (10) aufweist, die an der Hinterkante (9) auf der Seite der Wölbungsinnenfläche (7a) münden und dazu bestimmt sind, in einem Hohlraum (5) des Schaufelblatts (4) zirkulierende Kühlluft zu entnehmen,
**dadurch gekennzeichnet,**
**daß** sie auf der Seite der Wölbungsinnenfläche (7a) und in unmittelbarer Nachbarschaft der Hinterkante (9) einen Falz (12) aufweist, der sich von der Plattform (2) bis zu dem Schaufelkopf (11) erstreckt und von der Innenseite (13) der die Wölbungsaußenfläche (6a) bildenden Wand (6) und von einer im wesentlichen senkrecht zur Wölbungsinnenfläche (7a) verlaufenden Fläche (14) begrenzt wird,
**daß** die Schlitze (10) in der genannten Fläche (14) münden,
**daß** der Schlitz (10a), der der Plattform (2) am nächsten liegt, teilweise in der Plattform (2) mündet
und **daß** der Falz (12) sich dem genannten Schlitz (10a) gegenüber in die Plattform (2) verlängert.

2. Schaufel nach Anspruch 1,
**dadurch gekennzeichnet,**
**daß** die Schlitze (10) durch Stege (16) voneinander getrennt sind, welche die die Wölbungsinnenfläche (7a) bildende Wand (7) mit der die Wölbungsaußenfläche (6a) bildenden Wand (6) verbinden.
